# EUROPEAN PATENT APPLICATION

(11) **EP 1 605 381 A2**
(43) Date of publication of application: **14.12.2005**
(21) Application number: 04257289.1
(22) Date of filing: 24.11.2004
(51) Int. Cl.: G06F 17/60

(54) **Automated customer entitlement system for vendor services**

(30) Priority: 25.11.2003 US 722266
(71) Applicant: Hewlett-Packard Development Company, L.P., Houston, TX 77070 (US)
(72) Inventor: Tripp, Travis Scott, Fort Collins CO 80526 (US); Flocken, Philip A., Denver CO 80202 (US)
(74) Representative: Tollett, Ian

(57) **Abstract**

An entitlement system (30) provides for automated entitlement verification for plural vendor services (VSX) provided to customers (20). When registering (S₀₁) with the entitlement system, each service can specify a respective entitlement-verification rule as well as a respective entitlement reconciliation procedure to be applied in the event verification fails. The entitlement system provides for asynchronous notification (S₁₁) to a customer of a reconciliation process (specified by the respective entitlement-reconciliation procedure). If reconciliation succeeds, the requested service can be performed (S₇₀) without requiring the customer to resubmit the request. For security purposes, the verification function (33) that determines the initial entitlement result can be behind a firewall through which it must communicate with a reconciliation function (35) that manages the reconciliation procedure.

## Description

The present invention relates to an entitlement system for vendor services provided to customers and, more particularly, such vendor services provided over networks of computer-based devices. A major objective of the invention is to provide for flexible and efficient handling of entitlement queries.

E-commerce ("electronic commerce") has opened up new types of businesses and has increasingly replaced conventional forms of commerce (typically involving human individuals interacting in person, over the phone, and/or by mail). In e-commerce, human parties (human individuals and organizations) transact business using networked computing devices. Because the communications devices are computer-based, many facets of a transaction can be and are automated for reasons of efficiency and economy. For example, an individual can purchase music to download over the Internet at a music-vendor's site on the World-Wide Web without human intervention of the vendor's part. Sirmlarly, one can purchase and download ring tones for a cell phone over a telecommunications network.

When a request for service is received, an automated e-commerce vendor must decide whether or not to fulfill the request, and this decision is typically based on an expectation of value being received for the service. Since e-commerce does not handle currency, some form of prepayment or electronic-money transfer is typically required before services are performed. Entitlement checking involves associating a service request with an account and, if this is accomplished, then determining whether the account is entitled to the requested service. For example, payment for services can be credited or debited to an account; alternatively, pre-payment may be associated with a pre-existing service contract. If the entitlement check is positive, then the services are provided.

If the entitlement check fails to associate a service request with an account entitled to the requested service, entitlement fails. The automated e-commerce system then may decide to decline the request since payment is not assured. However, declining a request can result in a lost business opportunity; e.g., where alternative methods of payment are available, and lost future business, e.g., where a frustrated user decides to forgo future business with vendor's site.

Rather than decline to provide services, a vendor can attempt "entitlement reconciliation", e.g., provide a potential customer the option of opening an account or an existing customer an option of upgrading an existing account or opening a better entitled account. Once a suitable account is established, the customer can resubmit the request, which is then fulfilled.

Establishing entitlement can be relatively simple when the existing or to-be-established account belongs to a user-customer. Establishmg entitlement is more complex when the account is not directly associated with the user, e.g., where the user is an employee of a corporate customer. In the foregoing entitlement scenario, the user could not establish entitlement so the entitlement check fails and the requested service is denied. The user can then go to his employer's account handler, who must then negotiate with the vendor to effect the required entitlement. The user must then resubmit the request, which is subject to a further entitlement check. This can be very time consuming and the annoyance can discourage further use of the services. This complexity can be aggravated where the customer is a large company with many accounts with the samevendor.

If the vendor has many different services with different entitlement criteria and different approaches to entitlement reconciliation, entitlement handling can be quite costly. Including distinct entitlement routines in the software for each service can be a source of additional complexity and thus failure for the software service. What is needed is an enterprise-class entitlement system scalable to complex business relations between large companies.

The present invention provides a flexible automated entitlement system that can be used by multiple automated services with different rules for entitlement and different procedures for reconciling entitlement when entitlement fails. The invention also provides an entitlement method that allows a requested service to be performed without requiring a customer to resubmit the request after asynchronous entitlement reconciliation.

In one aspect of the invention, the entitlement system includes a registry, with which each vendor service registers. Registration involves providing a service identifier to the registry. Conveniently, an entitlement verification rule, an entitlement reconciliation procedure, and service communications instructions can be included with the registration of each service so that such information does not need to be provided each time an entitlement request is made. This registration information can be stored in a configuration file to be acted on by the entitlement system code. In this case, differences in verification rules and reconciliation procedures are merely differences in data, rather than distinct routines programmed for and with each service. When a service receives a service request for a customer, it can simply ask (by generating a respective entitlement request) whether the request is entitled to fulfillment.

An entitlement verification function applies the registered verification rule for the service requesting entitlement verification to account information retrieved from, for example, the vendor's account management software. The requesting service can be informed of the entitlement result so that the requested service can be performed if the result is positive and so that the requested service can store the service request pending reconciliation, if appropriate.

Another aspect of the invention provides for a range of entitlement reconciliation procedures, including synchronous (interactive) procedures, asynchronous procedures (in which the intended recipient does not have to be "connected" at the time a message is transmitted, e.g., as with mail, e-mail, and telephonic paging, and in contrast to phone conversations and interactive web sessions), and a null procedure in which service is denied without an opportunity for reconciliation when verification fails.

Synchronous reconciliation requires that a person with authority to reconcile entitlement be available, e.g., on-line, when reconciliation begins. This can be the case where a user that made a service request has reconciliation authority. However, this is less likely to be the case in a corporate setting, in which account handling is limited to a relatively small number of employees. For such situations, the present invention provides for notifying an authorized corporate contact of the entitlement failure and of an opportunity for reconciliation. The notice can be by e-mail (in which case, the reconciliation procedure is of the asynchronous type), and can have a link to a vendor website established to guide the contact through a reconciliation process. Alternatively, reconciliation can begin synchronously with the user who made the service request; if this fails, reconciliation can continue with asynchronous notification to an appropriate corporate contact.

For security purposes, the entitlement system is distributed so that the verification function is separated from the reconciliation function by a firewall. This distributed arrangement gives additional security to the verification function, which has more access to vendor data, while giving greater communications access to the reconciliation function, which interacts more with customers.

The invention provides for flexible handling of distinct entitlement verification rules and reconciliation procedures for any number of vendor services. The flexibility is represented in configuration files rather than in separate sets of program instructions, for ease of setup and reliability. The availability of asynchronous reconciliation procedures allows the opportunity for reconciliation to be targeted to a contact person other than the user making the request, which is useful for corporate customers. A surprising additional advantage is that, since the user is not required for reconciliation, the entitlement method can be applied to service requests made automatically, even those made automatically by unattended computer systems such as network servers in the customer's environment or, in some cases, within the vendor's environment. These and other features and advantages of a number of preferred embodiments of the invention are apparent from the description below with reference to the following figures.
FIGURE 1 is a schematic illustration of service vendor system providing services to a customer system in accordance with the present invention. In FIG. 1, dashed lines are specific to vendor service VS2.
FIGURE 2 is a flow chart of a method of the invention practiced in the context of the systems of FIG. 1.

In accordance with the present invention, a vendor-customer system AP1 includes a vendor 10 for providing services to a customer 20. Customer 20 includes both personnel, including an employee-user 21, and a customer contact 23, and a network of computers, including a user workstation 25, a contact workstation 27, and a network server 29. Server 29 runs a service client SC1 and user workstation 25 runs a service client SC2; service clients SC1 and SC2 monitor other programs running on their respective computers for software-support services offered by vendor 10.

Service client SC1 monitors activity on server 29. If service client SC1 detects a problem on server 29, it automatically submits a support request to service vendor 10. Likewise, if service client SC2 detects a problem on user workstation 25, it can submit a support request to service vendor 10. Service client SC2 can be configured either to submit the request directly or to notify user 21 first, who is then given control over the request submission process.

Service vendor 10 includes a computer system running various services VSX, including vendor services VS1 and VS2**,** an entitlement system 30, an account management system 40, a web interface 50, and a firewall 60. Entitlement system 30 includes a service registry 31, an entitlement verification function 33, an entitlement reconciliation function 35, and an entitlement reconciliation database 37. Service registry 31 can include a configuration file that stores registration information in the form of an XML ("extensiblemark-up language")file. Note that entitlement system 30 is distributed so that only reconciliation function 35 is in front of firewall 60.

Account management system 40 serves as a contract and account database and holds the information that entitlement system 30 uses to verify entitlement. For example, account management system 40 tracks the services due to and payment options for various accounts, including accounts of customer 20.

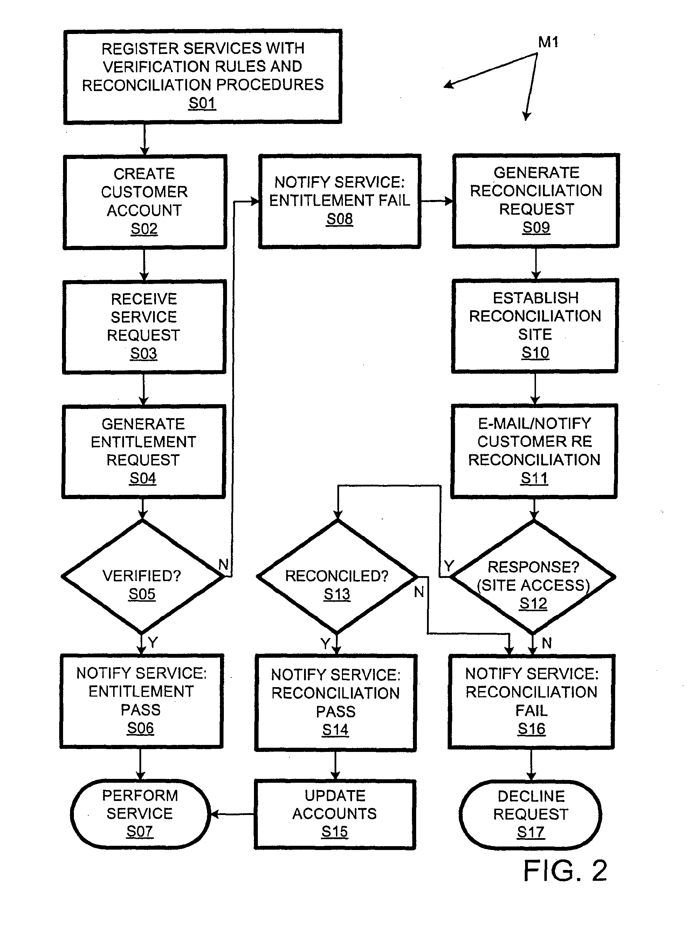

A method M1 implement in the context of system API is flow charted in FIG. 2. At step S01, services VSX are registered with service registry 31. The registration can be manual or automatic. Registration involves providing a service identifier, service communication instructions, a rule for entitlement verification, and a procedure for reconciliation. Registration is required because entitlement verification is not tied in advance to a particular service. Service communications instructions are required so that the entitlement system 30 knows how to return information to the vendor service.

An entitlement verification rule is required so entitlement requirements can be tailored on a per-service basis. (A singular "rule"encompasses the use of a set of one or more simple rules that can be combined to define a single more complex rule.) A service can have different sub-services or different levels of service with different entitlement requirements. In such cases, each sub-service is registered at step S01; alternatively, the verification rule can return results with more than two ("fail"versus "pass")results, e.g., "fail" versus "basic pass" versus "premium pass". In an alternative embodiment, the service submits one or more of communication instructions, an entitlement rule, and a reconciliation procedure with each entitlement-verificationrequest.

One or more customer accounts are established with vendor 10 at step S02, as indicated by the arrow from customer 20 to account management system 40. For example, one account can give customer 20 rights to support for an application running on workstation 25, while another account can give customer 20 rights to support to a net services application running on network server 29. Alternatively, both services can be included within a single contract. Of course, account management system 40 can provide for many different customers, each of which can have one or more accounts.

An account may be established when customer 20 purchases software or a software license from vendor 10. Alternatively, if the software is purchased elsewhere, the account can be established when the software is registered with vendor 10. More generally, an account can be established whenever customer enters into a support contract with vendor 10.

Customer 20 requests service from vendor 10 at step S03. For example, service client SC1 can detect a software fault on network server 29. In response, it gathers diagnostic data, which it packages as a service request including an identifier for an account with vendor 10. When vendor 10 receives the service request, web interface 50 routes it to service VS1 associated with the account identifier in the service request. In addition, vendor 10 assigns a request identifier to the service request. Alternatively, the service client can establish the request identifier by using an algorithm to generate a unique identifier. In an alternative to step S03, a service can generate a service request on behalf of a customer; for example, a service can generate a request for a periodic maintenance check that must be entitled before performance.

Before providing the requested service, service VS1 must determine whether the request is entitled to be met. To this end, service VS1 generates, at step S04, an entitlement request including its service identifier, the request identifier, and the account identifier to entitlement system 30, and, more specifically, to entitlement verification function 33, which is responsible for making the entitlement determination.

At step S05, entitlement verification function 33 queries account management system 40, which returns the required account data. *Also,* entitlement verification function 33 submits the request and service identifiers to service registry 31, which returns the entitlement-verification rule for service SC 1. Entitlement function then applies the verification rule to the account data, yielding either an "entitlement pass" (or "verification-yes")or an "entitlement fail" (or "verification-no")result.

In the event the request passes entitlement, verification function 33 notifies service VS1 of the pass at step S06. Service VS1 then can provide the requested service at step S07. During the course of a service request, further entitlement issues can arise. For example, it might turn out, upon problem analysis, that premium services are required, which would require entitlement to the premium services. In such cases, service VS1 can submit additional entitlement verification requests for the same service request. Given a restriction that verification results are dichotomous, different service identifiers, corresponding to different levels of service, are used for the different requests. Alternatively, verification results can specify multiple levels or types of pass.

Entitlement is determined according to the verification rule for the requesting service. For example, a rule can be that a request passes if it is active and paid up, and that it fails otherwise. A verification rule can specify that entitlement fails, for example, when an account is non-existent (maybe because the account identifier is incorrect), is expired, or requires advanced payment on a per-incident basis, or requires special authorization, etc.

The reconciliation procedure stored with the registration of service VS 1 determines what happens when entitlement verification fails at step S05. The specified reconciliation procedure can be synchronous or asynchronous or synchronous followed by asynchronous. Also, a reconciliation procedure can specify that no reconciliation be attempted so that a service request fails when verification fails. The reconciliation procedure specified for a service can be conditioned on the nature of the failure. In the example for service VS1, the registered reconciliation rules call for informing service VS1 of the failure at step S08, and then attempting reconciliation in subsequent steps. Since reconciliation is to be attempted, service VS1 stores the request in response to the notice step **SO8** so that, if and when reconciliation succeeds, it can act on the service request without requiring customer 20 to resubmit it.

In the meantime, verification function 33 generates a reconciliation request at step S09, which it sends to reconciliation function 35. Verification function 33 includes with the reconciliation request the service request identifier, the service identifier, the account identifier, the verification rule, the specification of the reconciliation procedure, and a textual description of the problem addressed in the service request.

As specified in the reconciliation procedure for service VS1, reconciliation function 35 sets up a reconciliation site at step S10. To this end, reconciliation function 35 creates a control file or memory representation (xml,name value pairs, etc) containing the corporate service identifier, the service-request identifier, a randomly generated temporary entitlement reconciliation password, the entitlement rule set and the textual description of the request.

The reconciliation site is a website using web interface 5 0 that can be accessed by customer 20. The website guides a user through a procedure designed to permit the customer to be entitled to the requested service. Depending on the reason for entitlement failure, reconciliation can involve submitting a different account identifier, establishing a new account, reviving an expired account, or simply paying for the requested service.

The reconciliation procedure for service VS1 specifies asynchronous notification of customer 20 via e-mail to customer contact 23, specified in the request, or alternatively in the account data. Since it may be some time before a response is received, reconciliation function 35 stores the reconciliation request in entitlement reconciliation database 37. Then reconciliation function 35 notifies customer 20 of the entitlement failure and of the opportunity for reconciliation at step S11. The notification provides the contact with the information regarding the problem associated with the request and provides a link to the reconciliation site. For security purposes, a password can be embedded in the link and the web site can be addressed using https (Hypertext Transport Protocol Secure).

The customer contact may or may not respond, as indicated at step S12. A response at step S12 implies customer contact 23 accesses the reconciliation site established at step S10, e.g., using contact computer system 27. Contact 23 is presented with a procedure for reconciling entitlement, e.g., by agreeing to a new contract, upgrading or reviving an existing contract, and/or making payment. The access may or may not result in entitlement reconciliation, as indicated at step S13.

If and when web interface 50 determines that the customer is entitled, it displays a success page to contact 23 and removes the entitlement reconciliation information stored for the request so that the customer cannot subsequently use the same service-request identifier and entitlement password to change entitlement on the request again (for this unique entitlement reconciliation request). Web interface 50 then sends notification (any messaging service, API, web service, etc) back to the internal entitlement service. The notification contains the corporate service identifier, the service request identifier and the newly entitled customer account identifier.

Reconciliation function 35 then notifies service VS1 of the successful reconciliation at step S14. Also, reconciliation function 35 can delete the request from reconciliation database 37 and update account management system 40 with any new account data at step S15. (Alternatively, web interface 50 can update account management system 40). The requested service can be performed at step S06. The requested service can automatically update its client SC1 or notify customer 20 to update service client SC1 manually to reflect new account information.

If reconciliation fails at step S 13 or if there is no response at step S12, for example within a specified 10-day duration, the opportunity for reconciliation lapses. The reconciliation procedure description can specify a second notice can be set just prior to lapse to give customer 10 a second chance at reconciliation. Entitlement reconciliation function 35 notifies vendor service VS1 of the reconciliation failure at step S16. The original service request is deleted by service VS1. *Also*, reconciliation function 35 deletes the associated reconciliation request from entitlement reconciliation database 37, and entitlement verification function 33 deletes the associated verification request. Service VS1 can also inform customer 20 of the failure. Note that the reconciliation site can also provide an option for contact 23 to communicate with appropriate personnel of vendor 10 for addressing reconciliation.

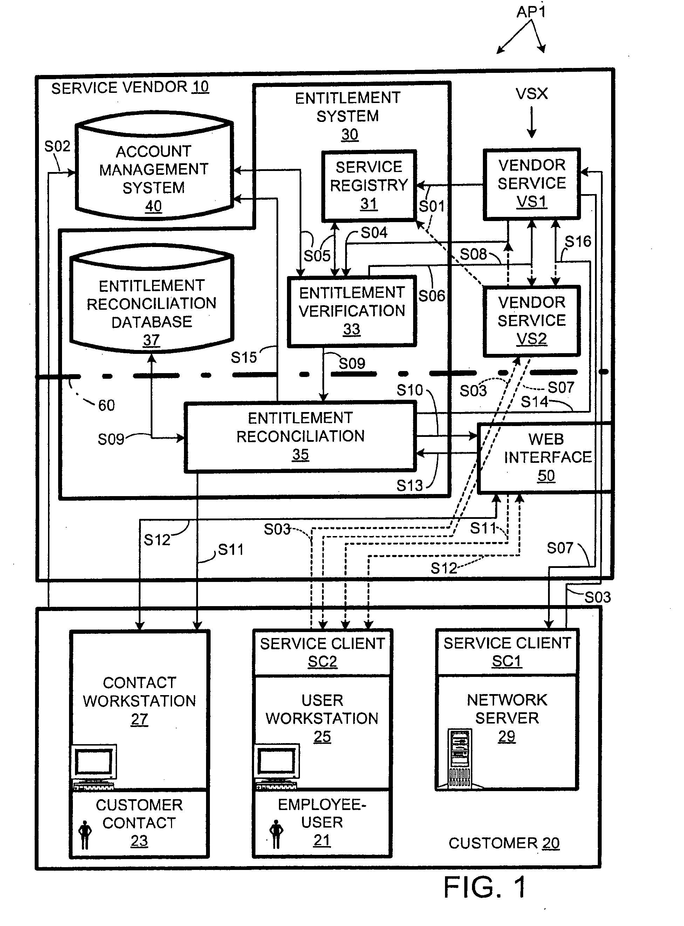

Method M1 also applies to vendor service VS2. At a second iteration of step S01, vendor service VS2 registers with entitlement system 30 as indicated by the dotted arrow from vendor service VS2 to service registry 31 in FIG. 1. The registration includes a verification rule and a reconciliation procedure for service VS2. The rule and procedure need not be and, in this example, are not the same as those for service VS1. At step S02, an account is created for providing service VS2 to customer as occurred with service VS1.

When service client SC2 detects a problem with an application running on user workstation 25, it notifies user 21 1 that a service request should be made and offers the option of requesting support at that or a later time. When user 21 commands, service client SC2 makes the service request to vendor 10, which receives the service request at step S03. The service request is made via vendor's web interface 50 using a browser on workstation 25, as indicated by the dotted arrow from service client SC2 through web interface 50 to service vendor VS2.

At step S04, service VS2 generates an entitlement request, which it transmits to verification function 33 (dotted and solid arrow from service VS2 to verification function 33 in FIG. 1). The verification request includes the service identifier for service VS2 and the request identifier. Verification function 33 accesses account management system 40 and service registry 31 to determine whether the entitlement rule for service VS2 is met at step S05. If entitlement is met, verification function 33 so informs service VS2 at step S06 as indicated by the partially dotted path from verification function 33 to service VS2 in FIG. 1.

If verification fails at step S05, reconciliation is pursued according to the reconciliation procedure registered for service VS2. In this case, entitlement fails because a contract has expired. The applicable reconciliation rules call for initially attempting immediate reconciliation using synchronous notification via the user's browser of the need and opportunity to reconcile, and, if that fails, trying asynchronous reconciliation.

First, verification function 33 notifies service VS2 of the verification failure at step S08. Then, at step S09, verification function 33 generates a reconciliation request and transmits it to reconciliation function 35. In response, reconciliation function 35 establishes a reconciliation website using web interface 50 at step S10. In this case, notice of an entitlement problem and the opportunity for reconciliation appears on the user's browser at step S11. If user 21 responds at step S12 by activating a link to the reconciliation web page, the reconciliation site is displayed, and the user is invited to reconcile entitlement. If reconciliation is successful, at step S13, reconciliation function so notifies service VS2 at step S 14 using the partially dotted path from entitlement reconciliation function 35 to vendor server VS2, shown in FIG. 1. Then the requested service is performed as indicated by the dotted arrow from web interface 50 to workstation 25.

If synchronous reconciliation fails, the reconciliation procedure for service VS2 calls for returning: a) to step S10, if the reconciliation site requires changing; or b) directly to notification step S11, if no site changes are required. In this case, e-mail notification is sent to contact 23 and a sub-procedure similar to the reconciliation procedure specified for service VS1 is followed. In the meantime, service VS2 stores the service request so that when entitlement is reconciled the request can be processed whether or not the original user 21 is still present.

For security purposes, both vendor 10 and customer 20 have firewalls at their Internet interfaces. In addition, vendor 10 has firewall 60, behind which are the services VSX, account management system 40, service registry 31, verification function 33, and reconciliation database 37. Of the illustrated components, only web interface 50, and reconciliation function 35 are not protected by firewall 60. Further protection can be achieved by using https, rather than unsecured http in vendor-customer communications.

As entitlement system 30 is distributed across firewall 60, communications through internal firewall 60 are through firewall components (not separately shown). In particular, entitlement verification function 33 and entitlement reconciliation function communicate through firewall 60 using firewall components. The paths shown from reconciliation function directly to services VS1 and VS2 for explanatory purposes can flow through verification function 33 to take advantage of the secure path between entitlement system components and to simplify communications paths between entitlement system 30 and services VSX.

While the detailed embodiment involves Internet communications, the invention also provides for vendor-customer communications over other networks, such as a cellular phone network. Asynchronous reconciliation can make use of pagers or message services. The requested services can be cellular phone services. Likewise, the invention applies to WiFi and other service distribution networks. These and other variations upon and modifications to the detailed embodiments are provided for by the present invention, the scope of which is defined by the following claims.

## Claims

1. An entitlement system (30) for vendor services (VSX) to be provided by a vendor (10) to customers (20), said services having respective entitlement-verification rules, said entitlement system comprising:
an entitlement registry (31) to which each of said services registers so that said registry associates a respective entitlement-verification ruleset with each of said services, said registry associating a first entitlement-verification ruleset with a first service (VS1); and
a verification function (33) for receiving entitlement requests from said services and for returning entitlement-verification results to said services, said verification function returning to said first service a first entitlement-verification result in response to a first entitlement request from said first service, said first entitlement-verification result being a function of said first entitlement-verification ruleset.

2. An entitlement system as recited in Claim 1 further comprising an entitlement-reconciliation function (33) for executing reconciliation procedures yielding entitlement-reconciliation results in response negative entitlement-verification results.

3. An entitlement system as recited in Claim 2 wherein a first entitlement-reconciliation result is achieved by executing a first entitlement-reconciliation procedure associated in said registry with said first service.

4. An entitlement system as recited in Claim 3 wherein said reconciliation function, in executing said first reconciliation procedure, sends an asynchronous notice to a first customer of an opportunity for entitlement reconciliation.

5. An entitlement system as recited in Claim 4 wherein said reconciliation function establishes a reconciliation website (50) to which said first customer is directed by said notice, said reconciliation website embodying a process through which said first customer can become entitled to said first service.

6. A method (M1) comprising:
receiving (So₃) a first service request for service to first customer,
in response to said first service request, making (So₄) a first entitlement request;
in response to said first entitlement request determining (So₅) whether or not a first entitlement-verification result is a fail;
in the event said first entitlement-verification result is not a fail, performing (So₇) said service for said customer;
in the event said first entitlement result is a fail, making (So₉) a first entitlement reconciliation request;
in response to said first entitlement-reconciliation request, asynchronously notifying (S11) said first customer of a first entitlement-reconciliation process that leads to reconciliation when executed by said first customer; and
in the event that said customer executes said first entitlement-reconciliation process, performing (So₇) said service for said customer without requiring resubmission of said first service request.

7. A method as recited in Claim 6 wherein said making said first entitlement reconciliation request involves transferring said reconciliation request through a firewall.

8. A method as recited in Claim 6 or 7 wherein said first entitlement result is determined by retrieving account information associated with said first customer and applying a first entitlement ruleset associated with said first service to said information.

9. A method as recited in Claim 8 further comprising registering (So₁) said first service so that said first reconciliation procedure and said first verification ruleset are associated with an identifier for said first service.

10. A method as recited in any one of claims 6 to 9 further comprising:
receiving a second service request for a second service of said vendor for a second customer;
in response to said second service request, making a second entitlement request;
in response to said second entitlement request, determining whether or not a second entitlement-verification result is a fail;
in the event said entitlement-verification result is a fail, making a second entitlement reconciliation request; and
in response to said second entitlement-reconciliation request, presenting said second customer with a second process for reconciling entitlement synchronously without asynchronous notification.
